# EUROPEAN PATENT SPECIFICATION

(11) **EP 1 815 572 B1**
(45) Date of publication and mention of the grant of the patent: **29.10.2008**
(21) Application number: 04806785.4
(22) Date of filing: 08.11.2004
(51) Int. Cl.: H02G 3/06

(54) **A JOINING DEVICE FOR CABLE DUCTS**
VERBINDUNGSVORRICHTUNG FÜR KABELKANÄLE
DISPOSITIF DE RACCORDEMENT POUR CONDUITS À CABLES

(43) Date of publication of application: 08.08.2007
(73) Proprietor: Bticino S.p.A., 20154 Milano (IT)
(72) Inventor: GARASSINO, Luca, I-15067 Novi Ligure (Alessandria) (IT); GANDINI, Paolo, I-15065 Frugarolo (Alessandria) (IT)
(74) Representative: Rondano, Davide
(86) International application number: PCT/IT2004/000613
(87) International publication number: WO 2006/048902

(56) References cited:
- EP-A- 0 617 493
- DE-U1- 7 919 186
- GB-A- 1 151 502
- IT-Z2- 215 032

## Description

The present invention relates to a joining device for cable ducts according to the preamble of Claim 1.

In order to house and protect cables, in particular electrical cables, it is known to use cable-carrying systems comprising a plurality of cable-duct sections connected in series with one another by means of end-to-end connections. Each cable-duct section includes a base wall and a pair of side walls which extend perpendicularly relative to the base wall so that the duct has a substantially U-shaped cross-section suitable for containing bundles of electrical cables. The duct sections generally extend along straight lines, except for those sections which serve as angular connections and which extend along curved lines.

Two consecutive cable-duct sections are generally mounted by the juxtaposition and subsequent connection of end portions of the sections with the use of joining devices typically formed by perforated plates. These joining devices have a plurality of apertures which are intended to be aligned, in the mounted condition, with corresponding holes provided in the end portions of both of the cable-duct sections to be connected. With the use of conventional perforated plates as joining members, the operation of assembling the cable duct is length and complex since the operator must perform the following steps in succession:
arranging the joining device with its apertures aligned with the holes in the end portion of one of the two cable-duct sections to be connected,
inserting respective fixing screws in each pair of apertures and holes,
screwing a nut onto the threaded shank of each fixing screw, and
repeating the same sequence of steps for the other cable-duct section.

In order to reduce the time required for the assembly of a cable-duct system, Italian utility model No. 215032 proposes a joining device comprising a notched, plate-like support element forming recesses and a plurality of screws with prismatic heads which are housed with transverse clearance in respective through-slots provided in the recesses. The insertion of the prismatic heads of the screws in the recesses of the notched plate prevents rotation of the screws. The heads of the screws are also retrained axially in the recesses by resilient means constituted by a sheet metal riveted to the notched plate and provided with resiliently deformable foils which cooperate with the heads of the screws.

The above-mentioned document thus describes a joining device for cable ducts which, by virtue of the fact that the fixing screws are incorporated in the support plate, permits to reduce the time required to connect two consecutive cable-duct sections. However, this known joining device has some disadvantages.

A first disadvantage is represented by its complex structure and consequently high cost since it requires to assemble the notched plate and the sheet provided with the resiliently deformable foils. A further disadvantage is due to the housing of the fixing screws in the slots of the plate with clearance, which may not ensure optimal stability of the interconnections of the cable-carrying structure.

The object of the present invention is therefore to overcome the above-mentioned and other disadvantages of the prior art by providing a joining device of the type indicated above which permits quick and easy assembly, which has a simple structure that can be produced at low cost, and which ensures a firm interconnection between the'cable-duct sections.

This object is achieved in full according to the present invention by a joining device having the characteristics specified in the characterizing part of Claim 1.

By virtue of a joining device of this type, the following advantages can be obtained, for example:
- the fixing screws can be inserted easily in the respective holes provided in the end portions of the cable-duct sections to be interconnected,
- the joining device has a structure that is simple and inexpensive to produce, and
- the form fit of the fixing screws in the slot-like portions of the apertures of the joining device is secure and firm over time.

Further characteristics and advantages of the invention will become clear from the following detailed description which is given purely by way of non-limiting example with reference to the appended drawings, in which:
figure 1 is a partial perspective view of a preferred embodiment of a joining device according to the invention and of the end portions of two consecutive cable-duct sections to be interconnected by means of the joining device,
figure 2 is a front perspective view of a constructional variant of the joining device according to the invention,

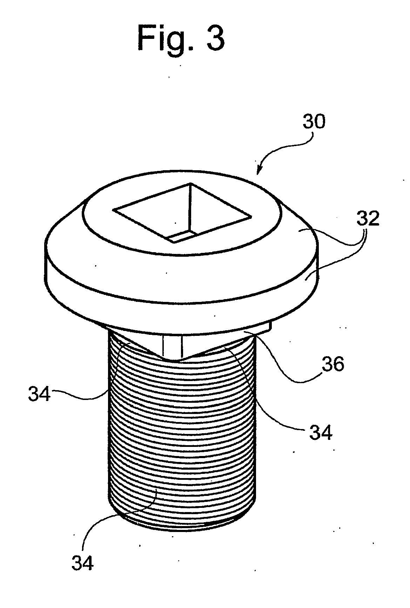

figure 3 is a perspective view of a fixing screw of a joining device according to the invention,
figure 4 is an enlarged view of a detail of the joining device identified by the square indicated by line IV in Figure 2, and
figures 5 and 6 are enlarged views which show in detail one of the apertures of a joining device according to the invention before and after the insertion of a fixing screw, respectively.

In the description and in the claims which follow, the terms "longitudinal" and transverse" are used to indicate the axial direction of the cable-duct sections and a direction perpendicular to the said axial direction, respectively. Moreover, the terms horizontal and vertical should be understood as referring to the normal mounted condition in which the base wall of the duct is arranged substantially horizontally.

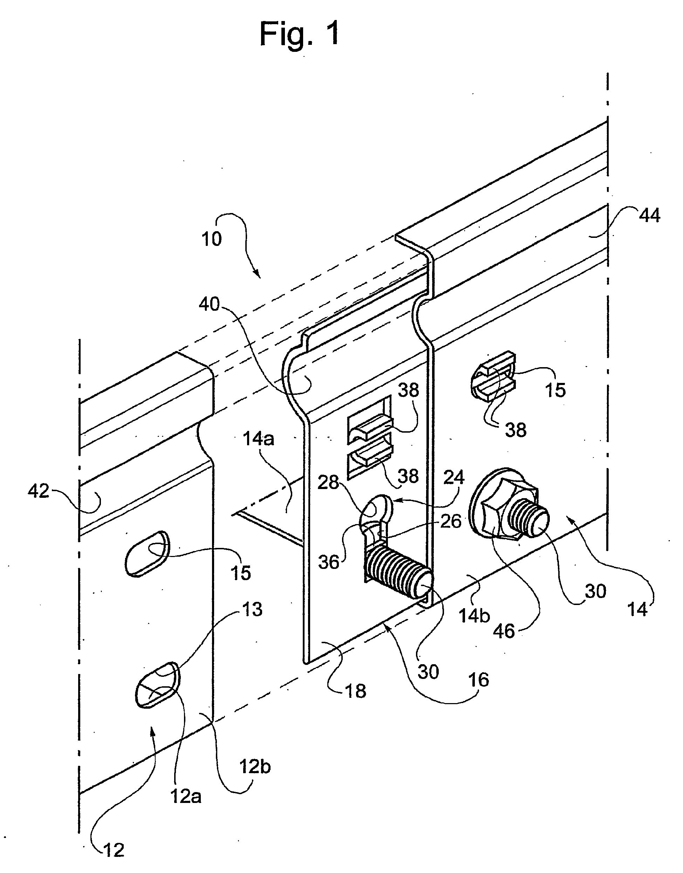

With reference initially to Figure 1, a joining device according to a preferred embodiment of the invention is generally indicated 10 and is intended to connect a pair of adjacent cable-duct sections 12, 14 arranged end to end. Each cable-duct section 12, 14 comprises a base wall 12a, 14a and a pair of side walls 12b, 14b which extend perpendicularly relative to the base wall 12a, 14a so as to define a substantially U-shaped profile which is intended to contain bundles of electrical cables and the like and which can be closed at the top by a suitable cover (not shown). At the longitudinal ends of each of the side walls 12b, 14b of the cable-duct sections 12, 14, there are provided a first hole 13 positioned in the lower portion of the wall and, preferably, a second hole 15 positioned above the first hole 13 and vertically aligned therewith. The first and second holes 13 and 15 are formed, for example, as slots which are elongate in a horizontal direction and are intended to receive respective members for fixing the joining device 10, as will be better explained in the following part of the description.

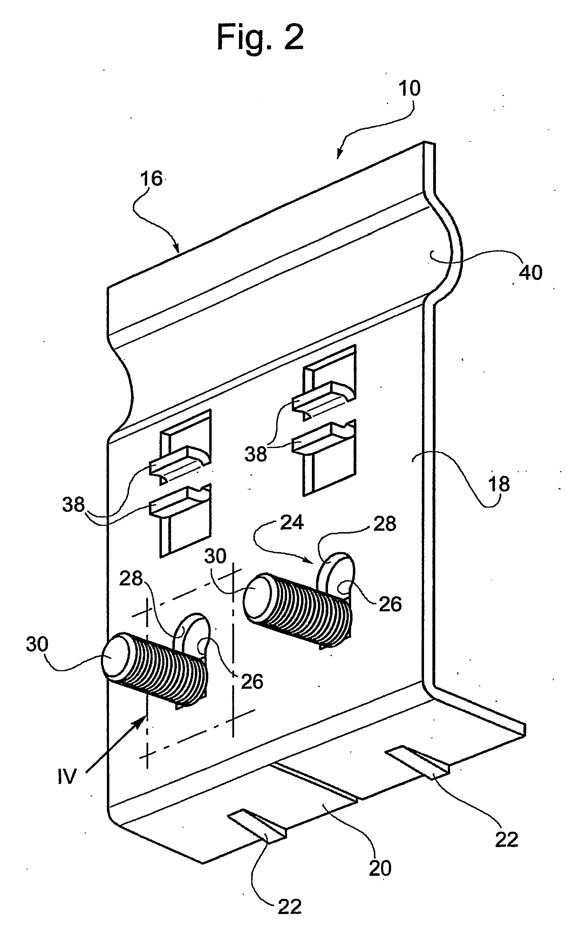

With reference to Figures 1 and 2, the joining device 10 comprises a plate-like element 16 defining a first, vertical flat portion 18. According to the constructional variant of Figure 2, the plate-like element 16 forms integrally a second, horizontal flat portion 20 of smaller dimensions than the first, vertical flat portion 18. The lower face of this horizontal flat portion 20 is provided with a plurality of projections 22 which are intended to engage the base walls 12a, 14a of the cable-duct sections 12, 14 in order to ensure electrical continuity between the pairs of interconnected sections, particularly for enamelled cable ducts.

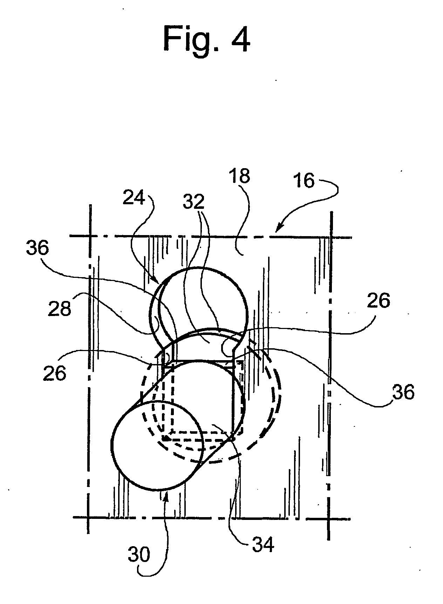

The vertical flat portion 18 of the plate-like element 16 has a pair of apertures 24 (one of which is shown in detail in Figure 4), each comprising a lower slot 26 extending substantially vertically and an upper hole 28 of enlarged cross-section, for example, a circular hole with a diameter greater than the width of the slot 26.

The joining device 10 also comprises a pair of fixing screws 30 housed in the apertures 24 and each having a head 32, a threaded shank 34, and a non-threaded intermediate portion 36. The shanks 34 of the screws 30 project from the vertical flat portion 18 of the plate-like element 16 transversely outwardly, that is, on the side remote from the horizontal flat portion 20, and are each secured in a respective aperture 24 by a form fit between its intermediate portion 36 and the slot 26 of the aperture 24. Naturally, a larger number of apertures 24 and of screws 30 may be provided.

In the illustrated embodiment, the intermediate portion 36 of the screws 30 is a substantially parallelepipedal portion which is undercut relative to the head '32 and the shank 34, but this portion may have suitably different shapes. In a variant not shown, the intermediate portion 36 may be formed by providing suitable grooves in the shank 34 of the screw so as to produce a cross-section complementary with that of the slot 26 of the aperture 24.

The form fit between the intermediate portions 36 and the slots 26 as well as the undercut configuration of those portions ensure that the screws 30 are secured in the apertures 24. In fact both movement of the screws in the plane of the vertical wall 18 (in particular rotation and translation perpendicular to the vertical axes of the slots 26) and movement perpendicular to that plane are prevented.

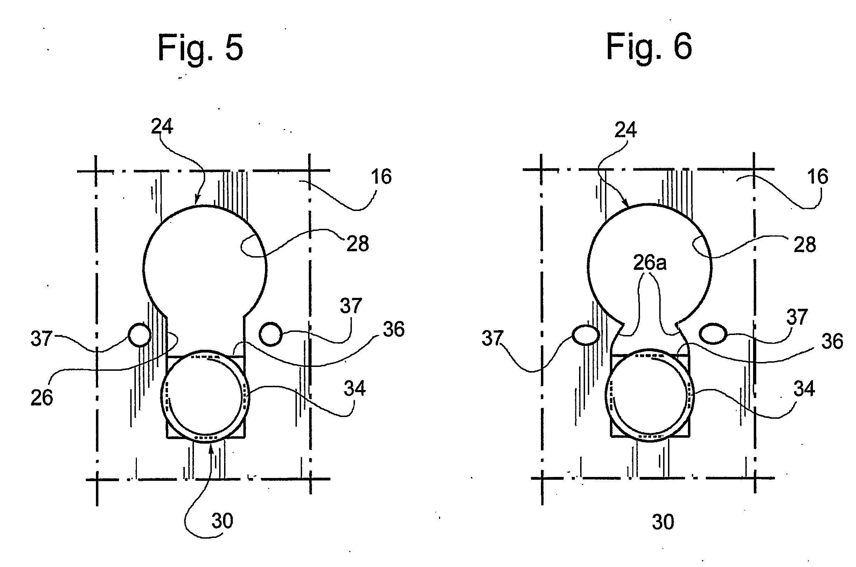

In order also to prevent movement of the screws 30 along the slots 26 and thus further to improve the stability of the coupling between the screws 30 and the plate-like element 16, there is provision for the production of a constriction 26a in the upper portion of the slot, that is, in the portion connected to the hole 28 of the same aperture, after the insertion of a screw 30 in the respective slot 26, as shown in Figure 6. For this purpose, a pair of small holes 37 are provided in the vicinity of the upper portion of each slot 26 and on opposite sides thereof (Figure 5), and are enlarged in a direction substantially perpendicular to the axis of the slot 26 by the insertion of a suitable punching tool (not shown), thus bringing about deformation of the adjacent slow portion 26 and the resulting production of the constriction 26a. The operation of securing the screws 30 in the slots 26 can thus advantageously be performed during the same stamping process by which the joining device 10 is produced. This clearly permits to simplify the manufacturing cycle and thus to reduce the cost of the device.

With reference in particular to Figure 4, the holes 28 of the apertures 24 have a cross-section which is enlarged in comparison with the slots 26 and with the shanks 34 of the screws 30 but narrower in comparison with the heads 32 of the screws 30. Each screw can thus be inserted with its shank 34 in the hole 28 and then secured with its intermediate portion 36 in the slot 26 of the aperture 24.

As can be seen in Figures 1 and 2, the vertical flat portion 18 of the plate-like element 16 advantageously comprises two pairs of tabs 38 produced, for example, by punching of the flat portion 18 in the vicinity of the apertures 24. The tabs 38 project transversely outwardly, that is, from the same side of the flat wall 18 as the shanks 34 of the screws 30 and are arranged to cooperate with the second holes 15 of the side walls 12b, 14b of the cable-duct sections 12, 14. The operation of these tabs will be described further below.

The plate-like element 16 of the connecting device 10 also advantageously forms a curved portion 40 which projects from the upper edge of the vertical flat portion 18. In Figure 1, it can be seen that the curved portion 40 of the plate-like element 16 is arranged to be coupled with a form fit with corresponding complementary curved portions 42, 44 of the two cable-duct sections 12, 14. This helps to improve the stability of the connection between the two duct sections 12, 14. The curved portion 40 of the plate-like element 16 of the joining device 10 may also be arranged in other positions of the vertical flat portion 18 or in the horizontal flat portion 20 and may also be shaped, for example, in the form of a curl.

Figure 1 shows schematically and partially, purely by way of example, a step in the operation of connecting the two cable-duct sections 12, 14 with the use of the joining device 10. For reasons of clarity, only the connection of the joining device 10 to one of the two duct sections, in particular to the section 14, is shown.

With the screws 30 secured by a form fit in the apertures 24 of the plate-like element 16, the operator brings the joining device 10 close to the end portions of the two cable-duct sections 12, 14 to be connected so that the shanks 34 of the screws 30 are inserted in the associated holes 13 in the side walls 12b, 14b of the two cable-duct sections.

The tabs 38 formed by the vertical flat portion 18 of the plate-like element 16 are snap-engaged in the corresponding holes 15 in the side walls 12b, 14b of the two cable-duct sections 12, 14. A precise alignment between the joining device 10 and the cable-duct sections 12, 14 is thus obtained and the connection between the duct sections is also reinforced in a region which is subject to particularly high mechanical stresses.

Finally, the connection between the two cable-duct sections 12, 14 by means of the joining device 10 is stabilized by screwing a nut 46 onto the threaded shank 34 of each screw 30.

Naturally, the principle of the invention remaining the same, embodiments and details of construction may be varied widely with respect to those described and illustrated purely by way of non-limiting example.

For example, although the invention has been described and illustrated with reference to the use of the device for the interconnection of a pair of straight cable-duct sections, clearly a joining device according to the invention may also be used for connection to different elements (that is to so-called accessory elements) of a cable-duct system, for example, bends, intersections and branches.

## Claims

1. A joining device (10) for interconnecting a pair of adjacent cable-duct sections (12, 14) arranged end to end, comprising:
a plate-like element (16) having a plurality of apertures (24) each of which includes a slot-like portion (26), and
a corresponding plurality of screws (30) inserted in the slot-like portions (26) of the apertures (24) and projecting from the plate-like element (16),
**characterized in that** each screw (30) comprises an intermediate portion (36) between a head (32) and a shank (34), which portion is secured by a form fit in the slot-like portion (26) of the respective aperture (24).

2. A joining device according to Claim 1, in which the intermediate portions (36) of the screws (30) are undercut relative to the heads (32) and the shanks (34) of the screws (30) so as to secure the screws (30) relative to the plate-like element (16) in the direction of their axes.

3. A joining device according to Claim 2, in which the intermediate portions (36) are of substantially parallelepipedal shape.

4. A joining device according to Claim 2 or Claim 3, in which the apertures (24) also include an insertion portion (28) of enlarged cross-section relative to the slot-like portion (26) and to the shanks (34) of the screws (30) so as to permit the insertion of the shanks (34) of the screws (30) in the apertures (24).

5. A joining device according to any one of the preceding claims, in which the plate-like element (16) forms projecting tabs (38) for snap-engagement in corresponding holes (15) in the cable-duct sections (12, 14) to be interconnected.

6. A joining device according to Claim 5, in which the projecting tabs (38) are disposed in the vicinity of the apertures (24).

7. A joining device according to any one of the preceding claims, in which the plate-like element (16) has a right-angled shape including a first, vertical flat portion (18) which has the said plurality of apertures (24) and a second, horizontal flat portion (20).

8. A joining device according to Claim 7, in which the second flat portion (20) forms a plurality of projections (22) for engaging the base walls (12a, 14a) of the two cable-duct sections (12, 14) to be interconnected.

9. A joining device according to any one of the preceding claims, in which the plate-like element (16) has curved portions (40) for coupling with a form fit with corresponding complementary curved portions (42, 44) of the cable-duct sections (12, 14).

10. A joining device according to any one of the preceding claims, in which each slot-like portion (26) forms, above the portion which houses the screw (30), a constriction (26a) for preventing movement of the screw (30) along the slot (26).

11. A joining device according to Claim 10, in which, at the two sides of each slot-like portion (26), above the portion which houses the screw (30), there are provided two holes (37) which are intended to be enlarged transversely relative to the slot (26) by the insertion of a punching tool so as to produce the said constriction (26a).

12. A cable-duct structure comprising:
a pair of adjacent cable-duct sections (12, 14) each having a base wall (12a, 14a) and a pair of side walls (12b, 14b) which have respective pluralities of holes (13, 15) and which extend perpendicularly relative to the base wall (12a, 14a) so as to form a substantially U-shaped profile, and
a pair of joining devices (10) according to any one of Claims 1 to 10, which interconnect the said pair of cable-duct sections (12, 14).

## Patentansprüche

1. Verbindungsvorrichtung (10) zum Verbinden eines Paars benachbarter Ende an Ende angeordneter Kabelkanalabschnitte (12, 14) miteinander, umfassend:
ein plattenähnliches Element (16), das eine Mehrzahl von Öffnungen (24) aufweist, von denen jede einen schlitzähnlichen Abschnitt (26) umfasst, und
eine korrespondierende Mehrzahl von Schrauben (30), die in die schlitzähnlichen Abschnitte (26) der Öffnungen (24) eingesetzt sind und von dem plattenähnlichen Element (16) hervorstehen,
**dadurch gekennzeichnet, dass** jede Schraube (30) einen Zwischenabschnitt (36) zwischen einem Kopf (32) und einem Schaft (34) umfasst, wobei der Abschnitt formschlüssig in dem schlitzähnlichen Abschnitt (26) der jeweiligen Öffnung (24) gesichert ist.

2. Verbindungsvorrichtung nach Anspruch 1, wobei die Zwischenabschnitte (36) der Schrauben (30) relativ zu den Köpfen (32) und den Schäften (34) der Schrauben (30) hinterschnitten sind, so dass die Schrauben (30) relativ zu dem plattenähnlichen Element (16) in der Richtung ihrer Achsen gesichert sind.

3. Verbindungsvorrichtung nach Anspruch 2, wobei die Zwischenabschnitte (36) von in wesentlich parallelepipetischer Form sind.

4. Verbindungsvorrichtung nach Anspruch 2 oder Anspruch 3, wobei die Öffnungen (24) ferner einen Einsetzabschnitt (28) von relativ zu dem schlitzähnlichen Abschnitt (26) und den Schäften (34) der Schrauben (30) vergrößertem Querschnitt umfassen, so dass das Einsetzen der Schäfte (34) der Schrauben (30) in die Öffnungen (24) ermöglicht ist.

5. Verbindungsvorrichtung nach einem der vorhergehenden Ansprüche, wobei das plattenähnliche Element (16) hervorstehende Nasen (38) zum Schnappeingriff in korrespondierende Löcher (15) in den miteinander zu verbindenen Kabelkanalabschnitten (12, 14) bildet.

6. Verbindungsvorrichtung nach Anspruch 5, wobei die hervorstehenden Nasen (38) in der Nähe der Öffnungen (24) angeordnet sind.

7. Verbindungsvorrichtung nach einem der vorhergehenden Ansprüche, wobei das plattenähnliche Element (16) eine rechtwinklige Form aufweist, die einen ersten, vertikalen flachen Abschnitt (18), der die Mehrzahl von Öffnungen (24) aufweist, und einen zweiten, horizontalen flachen Abschnitt (20) umfasst.

8. Verbindungsvorrichtung nach Anspruch 7, wobei der zweite flache Abschnitt (20) eine Mehrzahl von Vorsprüngen (22) zum Eingriff in die Grundwandungen (12a, 14a) der beiden miteinander zu verbindenden Kabelkanalabschnitte (12, 14) bildet.

9. Verbindungsvorrichtung nach einem der vorhergehenden Ansprüche, wobei das plattenähnliche Element (16) gekrümmte Abschnitte (40) zum formschlüssigen Koppeln mit korrespondierenden komplementären gekrümmten Abschnitten (42, 44) der Kabelkanalabschnitte (12, 14) aufweist.

10. Verbindungsvorrichtung nach einem der vorhergehenden Ansprüche, wobei jeder schlitzähnliche Abschnitt (26) über dem Abschnitt, der die Schrauben (30) aufnimmt, eine Verengung (26a) bildet, und zwar zum Verhindern einer Bewegung der Schrauben (30) entlang des Schlitzes (26).

11. Verbindungsvorrichtung nach Anspruch 10, wobei bei den beiden Seiten jedes schlitzähnlichen Abschnitts (26), über dem Abschnitt, der die Schrauben (30) aufnimmt, zwei Löcher (37) vorgesehen sind, die dafür bestimmt sind, durch Einführen eines Stanzwerkzeugs relativ zu dem Schlitz (26) transversal erweitert zu werden, um so die Verengung (26a) zu erzeugen.

12. Kabelkanalstruktur umfassend:
ein Paar benachbarter Kabelkanalabschnitte (12, 14), von denen jeder eine Grundwandung (12a, 14a) und ein Paar Seitenwandungen (12b, 14b) aufweist, die eine jeweilige Mehrzahl von Öffnungen (13, 15) aufweisen und die sich relativ zu der Grundwandung (12a, 14a) senkrecht erstrecken, so dass ein im Wesentlichen U-förmiges Profil gebildet wird, und
ein Paar von Verbindungsvorrichtungen (10) gemäß einem der Ansprüche 1 bis 10, die das Paar von Kabelkanalabschnitten (12, 14) miteinander verbinden.

## Revendications

1. Dispositif de raccordement (10) pour interconnecter une paire de sections adjacentes (12, 14) de conduit de câble agencées bout à bout, comportant :
un élément (16) analogue à une plaque ayant une pluralité d'ouvertures (24) qui comprennent chacune une partie (26) analogue à une fente, et
une pluralité correspondante de vis (30) insérées dans les parties (26) analogues à des fentes des ouvertures (24) et faisant saillie de l'élément (16) analogue à une plaque,
**caractérisé en ce que** chaque vis (30) comporte une partie intermédiaire (36) entre une tête (32) et une tige (34), laquelle partie est fixée par un ajustement de forme dans la partie (26) analogue à une fente de l'ouverture respective (24).

2. Dispositif de raccordement selon la revendication 1, dans lequel les parties intermédiaires (36) des vis (30) sont en contre-dépouille par rapport aux têtes (32) et aux tiges (34) des vis (30) afin d'immobiliser les vis (30) par rapport à l'élément (16) analogue à une plaque dans la direction de leurs axes.

3. Dispositif de raccordement selon la revendication 2, dans lequel les parties intermédiaires (36) sont de forme sensiblement parallélépipédique.

4. Dispositif de raccordement selon la revendication 2 ou la revendication 3, dans lequel les ouvertures (24) comprennent aussi une partie d'insertion (28) de section transversale agrandie par rapport à la partie (26) analogue à une fente et aux tiges (34) des vis (30) afin de permettre l'insertion des tiges (34) des vis (30) dans les ouvertures (24).

5. Dispositif de raccordement selon l'une quelconque des revendications précédentes, dans lequel l'élément (16) analogue à une plaque forme des languettes (38) en saillie destinées à être encliquetées dans des trous correspondants (15) des sections (12, 14) de conduit de câble devant être interconnectées.

6. Dispositif de raccordement selon la revendication 5, dans lequel les languettes (38) en saillie sont disposées au voisinage des ouvertures (24).

7. Dispositif de raccordement selon l'une quelconque des revendications précédentes, dans lequel l'élément (16) analogue à une plaque a une forme en angle droit comprenant une première partie plate verticale (18) qui présente ladite pluralité d'ouvertures (24) et une seconde partie plate horizontale (20).

8. Dispositif de raccordement selon la revendication 7, dans lequel la seconde partie plate (20) forme une pluralité de saillies (22) destinées à engager les parois de base (12a, 14a) des deux sections (12, 14) de conduit de câble devant être interconnectées.

9. Dispositif de raccordement selon l'une quelconque des revendications précédentes, dans lequel l'élément (16) analogue à une plaque comporte des parties arrondies (40) destinées à s'accoupler par ajustement de forme avec des parties arrondies complémentaires correspondantes (42, 44) des sections (12, 14) de conduit de câbles.

10. Dispositif de raccordement selon l'une quelconque des revendications précédentes, dans lequel chaque partie (26) analogue à une fente forme, au-dessus de la partie qui loge la vis (30), un resserrement (26a) destiné à empêcher tout mouvement de la vis (30) le long de la fente (26).

11. Dispositif de raccordement selon la revendication 10, dans lequel, sur les deux côtés de chaque partie (26) analogue à une fente, au-dessus de la partie qui loge la vis (30), se trouvent deux trous (37) qui sont prévus pour être élargis transversalement par rapport à la fente (26) par l'insertion d'un outil de poinçonnage afin de produire ledit resserrement (26a).

12. Structure de conduit de câble comportant :
une paire de sections adjacentes (12, 14) de conduit de câble ayant chacune une paroi de base (12a, 14a) et une paire de parois latérales (12b, 14b) qui présentent des pluralités respectives de trous (13, 15) et qui s'étendent perpendiculairement par rapport à la paroi de base (12a, 14a) afin de former un profil sensiblement en forme de U, et
une paire de dispositifs de raccordement (10) selon l'une quelconque des revendications 1 à 10, qui interconnectent ladite paire de sections (12, 14) de conduit de câble.
